# EUROPEAN PATENT APPLICATION

(11) **EP 4 822 602 A1**
(43) Date of publication of application: **14.10.2026**
(21) Application number: 25168837.0
(22) Date of filing: 07.04.2025
(51) Int. Cl.: G06N 3/063

(54) **ARTIFICIAL NEURAL NETWORK PROCESSOR UNIT AND ARTIFICIAL NEURAL NETWORK PROCESSOR SYSTEM**

(71) Applicant: Euclyd B.V., 5656 AG Eindhoven (NL)
(72) Inventor: KASTRUP, Bernardo, 5656 AG Eindhoven (NL)
(74) Representative: V.O.

(57) **Abstract**

An artificial neural network processor unit (1) is disclosed herein that comprises a dot product computation unit (35), a DRAM (11), a cache unit (12) and control logic (15) configured to control the dot product computation unit (35), the DRAM (11) and the cache unit (12). The dot product computation unit (35) is configured to compute a dot product (W • X) of the first vector (W) and the second vector (X). The DRAM (11) is configured to simultaneously output a plurality of first vector elements of the first vector (W). The cache unit (12) comprises a plurality of registers (13) and is configured to simultaneously load respective ones of the plurality of first vector elements into respective ones of the plurality of registers and has a selection facility (141, 142) configured to output the plurality of first vector elements one by one to the dot product computation unit (35) for multiplication with a respective second vector element of the second vector in the process of computing the dot product. Also an artificial neural network processor system comprising a plurality of artificial neural network processor units is disclosed.

## Description

The present application pertains to an artificial neural network processor unit.

The present application further pertains to an artificial neural network processor system.

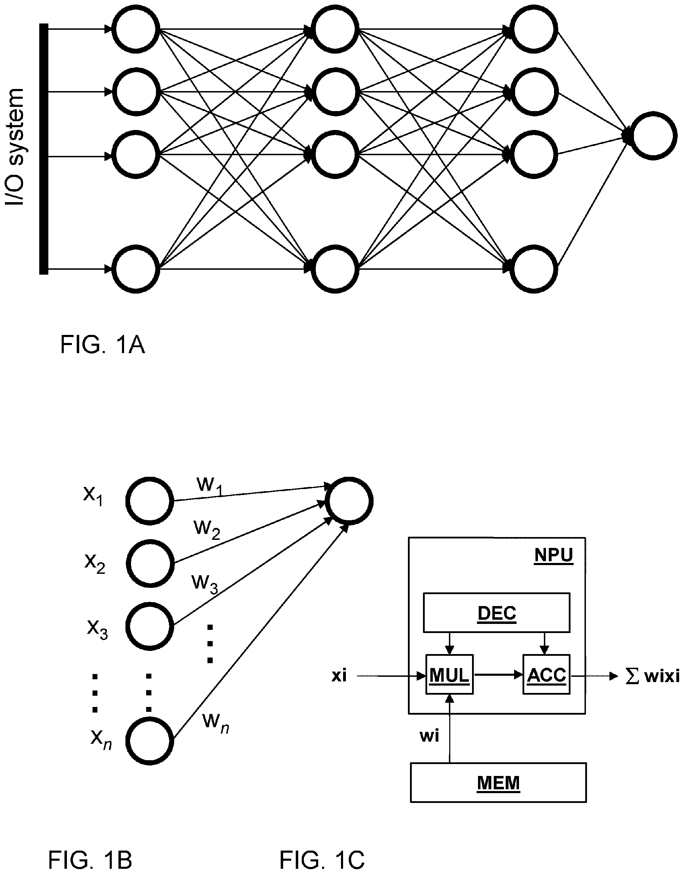

An artificial neural network processor system comprises a plurality of programmable artificial neural network processors optimized for Artificial Neural Network (ANN) computations, also denoted herein as Neural Processing Units (NPUs). FIG. 1A illustrates a four-layer ANN comprising several artificial neurons. In FIG 1A the neurons are indicated as circles and their interconnections are illustrated by arrows.

The main computation to be performed by an NPU is a so-called 'dot product," as illustrated in FIG. 1B and FIG. 1C: a vector multiplication between an input data vector X and a weights vector W. Specifically, if X = [x1, x2, ..., xn] and W = [w1, w2, ..., wn], then the dot product W.X = w1.x1 + w2.x2 + ... + wn.xn.

FIG. 1C schematically shows an NPU that is configured to perform a dot product computation. In operation the instruction decoder DEC instructs the multiplier MUL to perform the multiplications wi.xi and the accumulator ACC to accumulate the results. Typically the data xi from the data vector X is received as a stream from a sensor or from a preceding neural network layer. The weights wi need to be retrieved from a weight storage memory MEM. In order to achieve a good performance it is important that the retrieval of the weights from weight storage MEM does not impose a bottleneck therein.

In computing, it is known in the art that dynamic random-access memory (DRAM) is roughly 10x slower vis-à-vis access time (i.e., the time it takes from addressing the memory to request data, to the moment the data becomes available and stable at the memory's data output) as compared to SRAM. This is one reason why, in new systems-on-a-chip (SoCs) and systems-in-a-package (SiPs) architectures for the implementation of artificial neural networks (ANNs), SRAM is often preferred, despite the fact that it imposes a significant extra cost in terms of silicon area (roughly 10 times more).

### SUMMARY

It is an object of the present invention to provide an improved artificial neural network processor unit that renders possible an efficient performance of dot product computations while mitigating silicon area requirements for weight storage.

It is a further object of the present invention to provide an improved artificial neural network processor system.

In accordance with this object, the improved artificial neural network processor unit comprises a dot product computation unit, a dynamic random access memory (DRAM), a cache unit and control logic comprising a register selector.

The dot product computation unit has a first input for receiving subsequent first vector elements of a first vector and a second input for receiving subsequent second vector elements of a second vector. The dot product computation unit is configured and is controlled by the control logic to compute a dot product of the first vector and the second vector.

The DRAM is configured and controlled by the control logic to simultaneously output a plurality of first vector elements of the first vector.

The cache unit comprises a plurality of registers that are configured and controlled by the control logic to simultaneously load respective ones of the plurality of first vector elements into respective ones of the plurality of registers.

The register selector is configured to cause the cache unit to output the plurality of first vector elements one by one to the first input of the dot product computation unit for multiplication with a respective second vector element of the second vector in the process of computing the dot product.

The improved artificial neural network processor unit mitigates silicon area requirements for weight storage, in that a DRAM is used for this purpose. As compared to an SRAM the required silicon area is about 10 times smaller. Only a negligible additional area is needed for the elements of the cache unit. Despite the relatively slow response time of the DRAM the artificial neural network processor unit can efficiently perform dot product computations, as becomes apparent from the following.

Typically a dot product computation in an artificial neural network is performed to vectors having a length of 100 or more vector elements. For example the first layer in AlexNet is a 11x11 convolution on an 3-channel input image. This implies that each dot product computation in the first layer requires 363 multiplications. As another example, the dot product computations in the three fully connected layers in AlexNet require 4096, 4096 and 1000 multiplications respectively. Yet, the efficiency of the improved artificial neural network processor unit is hardly impeded by the relatively slow DRAM, in that in operation, a plurality of first vector elements of the first vector can be fetched from the DRAM while the cache unit outputs one by one another plurality of first vector elements that it has fetched prior to the first input of the dot product computation unit. Hence, in the worst case only a minor delay occurs when the first plurality of first vector elements of the first vector is fetched from the DRAM. In subsequent fetches this delay is hidden. Suppose for example that 8 weights are fetched simultaneously from the DRAM in the process of computing a dot product of vectors of length 363, then the loss of efficiency is only 2.2 %. In the example that the vectors have a length 1000 or 4096, the loss of efficiency is only 0.8% and 0.2% respectively.

Still further, even this minor loss of efficiency can be avoided due to the fact that in an ANN the execution moment of many-if not all-instructions is known statically, at coding time. Therewith an instruction to fetch the first plurality of first vector elements of the first vector can be provided in due time before the instruction for the dot product computation.

In some embodiments the dot product computation unit is part of a reduced instruction set (RISC) processor. Therewith the artificial neural network processor unit is also suitable to perform other computation functions, so that it can be configured in various ways. For example, at least part of the control logic that controls the operation of the cache unit is part of the reduced instruction set (RISC) processor. The RISC processor in a neural network processor unit preferably is capable of performing all operations in a predetermined number of clock cycles, so that its operation can be synchronized with other neural network processor units in a neural network processor system comprising a plurality of neural network processor units. By way of example the RISC processor comprises a three-stage pipeline, with an instruction fetch stage wherein an instruction is read from instruction memory and latched in an instruction register IR, an instruction decode stage wherein the instruction latched in the instruction register IR is translated into individual control signals for internal resources, said individual control signals being latched in a decoded instruction register DIR, and an execution stage wherein an operation defined by the control signals latched in the decoded instruction register DIR is carried out and its result stored in a dedicated register. The three-stage pipeline renders possible an efficient execution of neural network operations in three steps.

A RISC processor comprised in an artificial neural processing unit may control all steps involved in the computation of a dot product of a first vector and a second vector. To that end its instruction set may comprise an instruction that causes the instruction decoder of the RISC processor to output control signals that:
cause the DRAM to simultaneously output a plurality of first vector elements of the first vector;
cause the cache unit to simultaneously load respective ones of the plurality of first vector elements into respective ones of the plurality of registers and to output the plurality of first vector elements one by one to the dot product computation unit;
cause the dot product computation unit to multiply the plurality of first vector elements that are outputted one by one with a respective second vector element of the second vector in the process of computing the dot product.

In some embodiments, the RISC processor comprises an instruction decoder that is configured to fetch and decode an instruction that causes the DRAM to perform a refresh cycle.

An artificial neural network processor unit may be a processor cluster. A processor cluster may comprise two or more processors that share the DRAM. The two or more processors for example comprise a first processor that is configured or programmed as the dot product computation unit and a second processor that performs other tasks, such as causing the DRAM to perform a refresh cycle. Also the second processor may be configured to control the prefetching of weights, so that the first processor merely only needs to receive the weights and perform the necessary computations. It is presumed that the processors in the cluster operate in a clock-driven manner. Therewith the processors in the cluster can be programmed to access the shared DRAM in mutually different time intervals.

In some embodiments of the artificial neural network processor unit the cache unit comprises a multiplexer that is coupled to a respective output of each of the plurality of registers and that is configured to select one of said respective outputs in accordance with selection signals issued by the register selector. This embodiment is particularly favorable if the number of registers is large, as in that case the number of control signals for selecting can still be modest.

In an alternative embodiment the plurality of registers are each coupled by a bus to the first input of the dot product computation unit and the register selector is configured to output enable the plurality of registers one by one with a respective output enable signal. This embodiment may also be suitable. However if the number from which the selection is to be made is too large, the number of control signal lines may be intractable and the capacitive busload may become too high. Combinations are possible. E.g. respective groups of registers may coupled to respective multiplexers, which in turn are coupled in an output enable controllable manner to a bus connected to the first input of the dot product computation unit.

In some embodiments the artificial neural network processor unit is implemented in a wafer- or die-bonded pair of a first die and a second die, wherein at least part of the DRAM is implemented on the first die and wherein the dot product computation unit, the cache unit and the control logic, such as the instruction decoder, are implemented in the second die. This has the advantage that each of the dies can be manufactured with a manufacturing process optimized for the respective structures. In particular the first die can be designed to optimally preserve a charge state of the DRAM memory cells and the second die can be designed for optimizing speed of logic operations.

Functional aspects of the DRAM may be distributed between the first die and the second die in various ways. In one example only the matrix of DRAM memory cells is implemented in the first die and address decoding logic is implemented in the second die. In another example the DRAM is completely implemented in the first die, and access thereto is provided by a data port, an address port and control signals like DRAM write enable and DRAM output enable. In a third example the DRAM comprises a matrix of DRAM memory cells and row and column address decoding logic on the first die, and wherein the control logic implemented in the second die is configured to control the row and column address decoding logic. The latter exemplary embodiment is advantageous, in that the number of electrical connections between the first die and the second die is significantly reduced with a minimum of control logic in the first die.

Electric connections between the first die and the second die may be provided in various ways.

In one example the first die and the second die are electrically coupled with Through Silicon VIAs (TSVs).

In another example the first die and the second die are electrically coupled by electrical connections in an interposer that is sandwiched between the first die and the second die.

Embodiments of the artificial neural network processor unit implemented in a wafer- or die-bonded pair of a first die and a second die can further comprise a layer of dielectric heat-conductive material between the first die and the second die. Suitable materials for this purpose are diamond, diamond-like carbon (DLC), hexagonal boron nitride (h-BN), aluminum nitride (AlN), copper with dielectric isolation layers, graphene and graphene-enhanced composites, and the like. In some examples the layer of dielectric heat-conductive material is thermally coupled to an external heat-spreader or heatsink.

A first die and a second die of the artificial neural network processor unit may alternatively be interconnected in that the first die has a plurality of first electric contacts at a first die surface facing the second die and the second die has a plurality of second electric contacts at a second die surface facing the first die, wherein respective ones of the first electric contacts electrically connect with respective ones of the plurality of second electric contacts.

The present disclosure further provides an artificial neural network processor system comprising a plurality of synchronously-operating artificial neural network processor units, as described above, that are arranged in a two-dimensional array, wherein a first plurality of artificial neural network processor units in a first column of the array is logically coupled to a second plurality of artificial neural network processor units in a second, directly adjacent column by at least one shared external bus.

### BRIEF DESCRIPTION OF THE DRAWINGS

FIG. 1A illustrates a four-layer ANN comprising several artificial neurons.
FIG. 1B schematically shows a dot product computation performed by an artificial neuron.
FIG. 1C schematically shows a neural processing unit configured to perform a dot product computation
FIG. 2 schematically shows an embodiment of an artificial neural network processor unit.
FIG. 3 shows another embodiment of an artificial neural network processor unit.
FIG. 4 shows again another embodiment of a neural network processor unit.
FIG. 5 schematically shows an artificial neural network processor system.
FIG. 6 schematically shows a RISC processor suitable for use in a neural network processor unit.
FIG. 7A, 7B, 7C, and 7D show exemplary implementations of a neural network processor system using a pair of mutually interconnected dies.
FIG. 8 shows an exploded view of an implementation of an artificial neural network processor system implemented in the form of a plurality of chiplet pairs.
FIG. 9 shows an exemplary circuit specification of components of the artificial neural network processor unit.

### DETAILED DESCRIPTION OF EMBODIMENTS

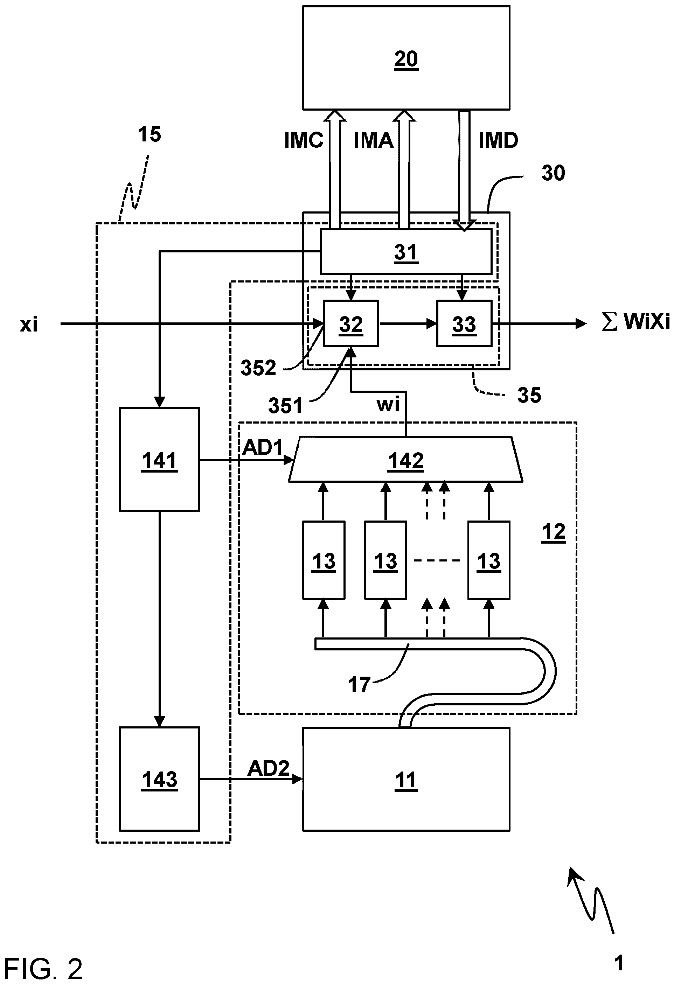

FIG. 2 schematically shows an embodiment of an artificial neural network processor unit 1 that comprises a dot product computation unit 35, a DRAM 11, a cache unit 12 and control logic 15. In the example shown, the dot product computation unit 35 is part of a neural processing unit 30 that further comprises an instruction decoder 31 coupled to an instruction memory 20 by an instruction memory address bus IMA, an instruction memory data bus IMD and instruction memory control lines IMC. The instruction decoder 31 itself comprises means for fetching an instruction from instruction memory 20. The neural processing unit 30 may comprise further dedicated components, for example dedicated components for other typical neural network computations such as SoftMax operations, normalization operations, or for general purpose operations.

The dot product computation unit 35 has a first input 351 for receiving subsequent first vector elements wi of a first vector W, also denoted as 'weight vector', and a second input 352 for receiving subsequent second vector elements xi of a second vector X, also denoted as data vector. The dot product computation unit 35 is configured to compute a dot product W**•**X of the first vector W and the second vector X. This is schematically shown in that the dot product computation unit 35 comprises a multiplier 32 that performs the multiplications wi*xi and an accumulator 33 that accumulates the multiplication results. In an example the accumulator 33 may also be configured to operate independently of the multiplier 32.

Very efficient implementations of a dot product computation unit are provided in European patent application 25161332.9 of the same applicant.

The DRAM 11 is configured to simultaneously output a plurality of first vector elements of the first vector W. By way of example the DRAM is configured to simultaneously fetch 8 vector elements having a length of 8 bits each. This can be achieved for example through the use of a DRAM comprising a 64-bit data word at each of its address locations, so that each data word fetched from DRAM comprises 8 vector elements of 8 bits each.

The cache unit 12 comprises a plurality of registers 13 configured to simultaneously load respective ones of the plurality of first vector elements into respective ones of the plurality of registers. The control logic 15 comprises a register selector that is configured to output the plurality of first vector elements one by one to the first input 351 of the dot product computation unit 35 for multiplication with a respective second vector element of the second vector in the process of computing the dot product.

The control logic 15 is configured to control the dot product computation unit 35, the DRAM 11 and the cache unit 12. In the example the cache unit 12 comprises a multiplexer 142 that is coupled to a respective output of each of the plurality of registers 13 and the register selector is a first counter 141 that is configured to issue a selection signal, being a binary count value AD1. In accordance with the selection signal AD1 the multiplexer 142 selects one of said respective outputs as the one that provides the weight value wi to the first input 351 of the dot product computation unit. The DRAM 11 is addressed by a count value AD2 of a second counter 143. In another embodiment the selection signal AD1 and/or the count value AD2 are provided by a general purpose processor in the artificial neural network processor unit 1, for example the neural network processing unit 30 or by a separate general purpose processor in the artificial neural network processor unit 1.

The control logic 15 in this example comprises the instruction decoder 31, the first counter 141 and the second counter 143.

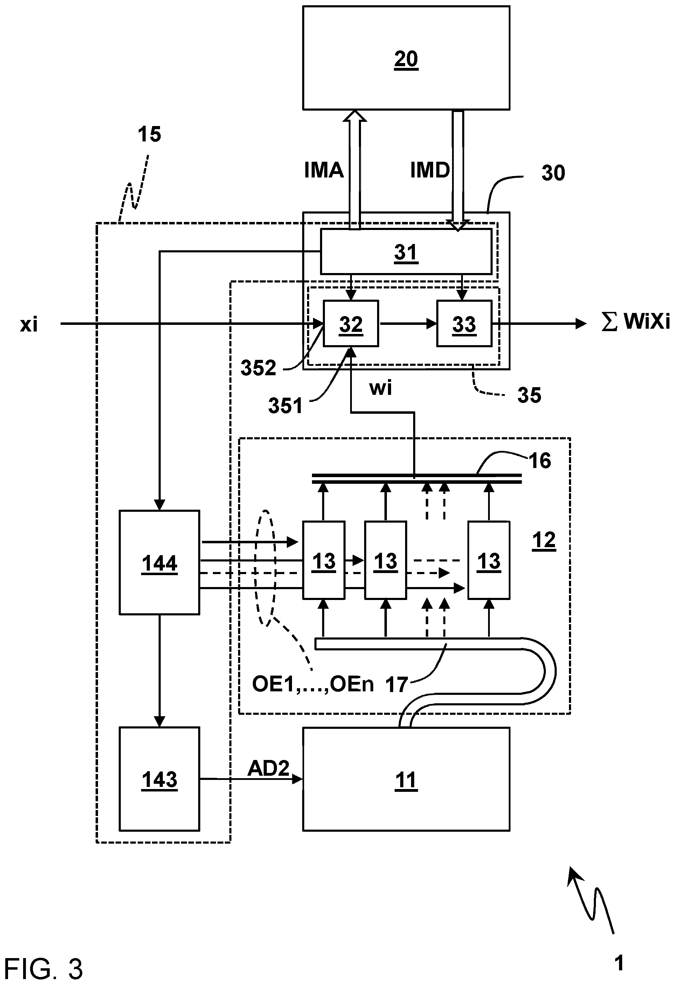

FIG. 3 shows another embodiment of an artificial neural network processor unit 1 that differs from the embodiment shown in FIG. 2 in that the plurality of registers 13 are each coupled by a bus 16 to the first input 351 of the dot product computation unit 35. In this another embodiment the register selector comprises a first counter 144 that selectively output enables one of the plurality of registers by a respective output enable signal OE1,...,OEn. Also in this case, a general purpose processor may be used to generate the control signals, in this case the output enable signals OE1,...,OEn and/or the count value AD2. The general purpose processor is for example the neural network processing unit 30 or a separate general purpose processor in the artificial neural network processor unit 1.

As becomes apparent from a comparison of FIG. 2 and FIG. 3 the embodiment of FIG. 2 is advantageous in that less control lines are required. For example if the cache unit 12 comprises 8 registers 13, the embodiment of FIG. 3 needs 8 control lines to selectively output-enable one of registers, while the embodiment of FIG. 2 only needs 3 control lines to control the multiplexer 142.

In practice the cache unit 12 may even comprise a substantially larger number of registers. For example, many important ANNs use only half-precision (i.e., 16-bit) floating-point weights, whereas a DRAM may be provided with a width of 2048 bit (or even more). In that case the number of registers 13 in the cache unit 12 would amount to 128. In the embodiment of FIG. 3 this would not only necessitate an equally large number, 128, of output enable lines in the embodiment of FIG. 3, but would also impose a significant capacitive load of the bus 16. In the embodiment of FIG. 2 only Log₂ (128) = 7 control lines are required to control the multiplexer 142.

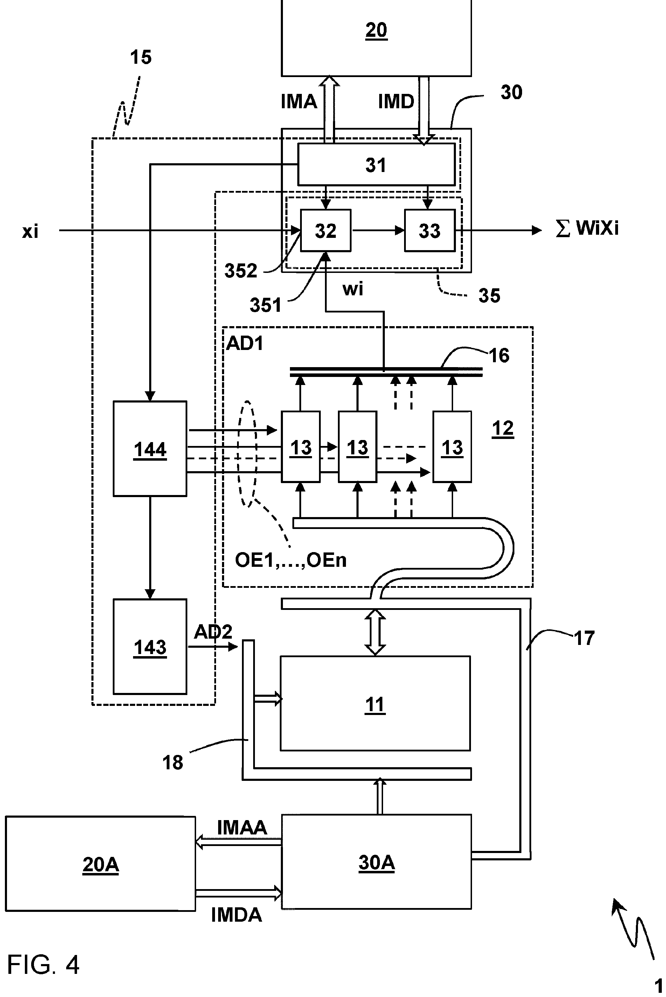

FIG. 4 shows an example of an artificial neural processor unit 1 formed as a processor cluster comprising two or more processors that share the DRAM. In this example the artificial neural processor unit 1 comprises two processors 30 and 30A that have a proper instruction memory 20, 20A respectively, but that share the DRAM 11. To that end, both processors share access to the DRAM 11 by a data bus 17 and an address and control bus 18. The first processor 30 is configured or programmed as the dot product computation unit 35 as specified with reference to FIG. 2 and FIG. 3. The second processor is configured to performs other tasks, such as causing the DRAM to perform a refresh cycle. The processors 30, 30A in the cluster operate in a clock-driven manner. Therewith the processors in the cluster can be programmed to access the shared DRAM in mutually different time intervals. In one example the second processor 30A also performs the function of the control elements 143 and 144.

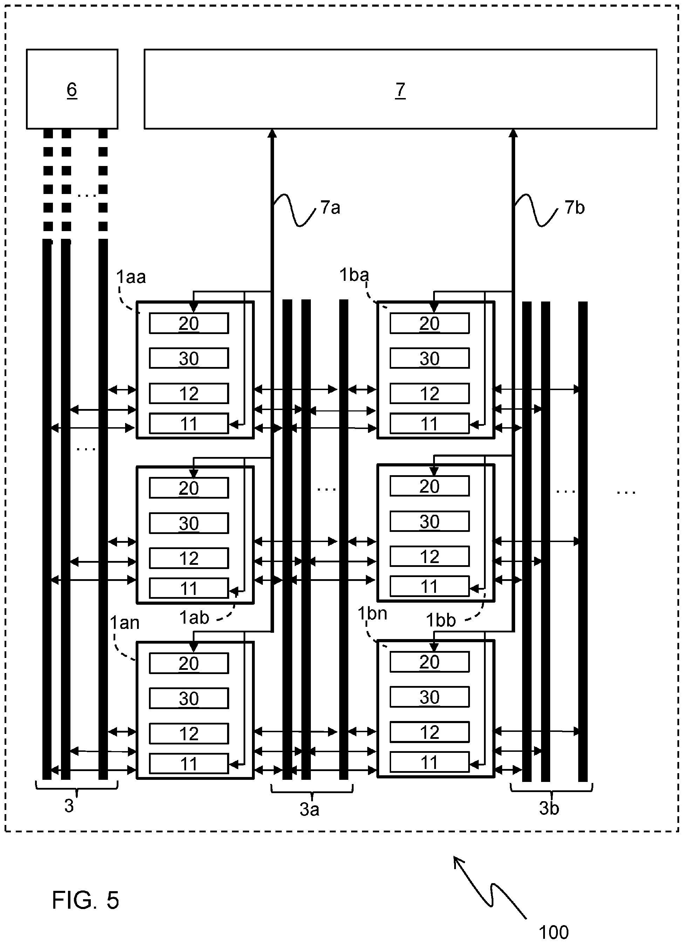

FIG. 5 schematically shows an artificial neural network processor system 100 comprising a plurality of synchronously operating artificial neural network processor units that are arranged in a two-dimensional array. A first plurality of artificial neural network processor units 1aa, 1ab, ..., 1an in a first column of the array are logically coupled by at least one shared external bus 3a to a second plurality of artificial neural network processor units 1ba, 1bb, ..., 1bn in a second, directly adjacent column. As schematically shown in FIG. 5, the artificial neural network processor units 1aa, 1ab, ..., 1an, 1ba, 1bb, ..., 1bn each comprise an instruction memory 20, a neural processor unit 30, a cache unit 12 and a DRAM 11. The artificial neural network processor units in the array are for example of the type shown in FIG. 2, FIG. 3 or FIG. 4. In some embodiments the artificial neural network processor units are processor clusters. Processor clusters, of which an example is described with reference to FIG 4, may comprise a plurality of processors that share a common DRAM 11. For example a processor cluster may comprise one or more additional processors that share the common DRAM 11, but that each have a proper instruction memory within a cluster. The one or more additional processors do not necessarily have a proper cache unit, but may instead directly access the common DRAM. By way of example an additional processor may be configured to perform refresh operations of the DRAM.

Although, for the sake of clarity, only two columns of artificial neural network processor units are shown, it will be readily understood that the array can be extended with an arbitrary number of columns of units. For example, the second plurality of units 1ba, ..., 1bn may be logically coupled to a third plurality of units by the external bus 3b. Alternatively, the external bus may serve as an output bus to allow the artificial neural network processor system 100 to supply a neural network output to another device. An external bus is not exclusively restricted to one of these purposes. In some embodiments an external bus, e.g. 3a, may serve both to couple mutually adjacent columns of units 1ba, ..., 1bn and to provide (intermediate) output results to an external device. As shown in FIG. 5, the external bus 3, which is logically coupled to the first plurality of processors 1aa, ..., 1an, is further coupled to a data source 6, e.g. a digital camera, a microphone, an internet connection, or other blocks of a System-on-a-Chip (SoC) of which the present processor system 100 is an element, so as to allow the dedicated processor system 100 to receive input data from the data source 6. FIG. 5 also shows a neural network mapper 7. As specified in more detail further in the description, the neural network mapper 7 is configured to supply the dedicated processor system 100 by configuration buses 7a, 7b with configuration data for the neural network to be mapped, such as network connections, neural network function information and neural network parameters. In some embodiments, the dedicated processor system 1 may also be configured to train a neural network and the neural network mapper 7 in that case may be further configured to read neural network parameter data of the trained neural network.

As shown in FIG. 5, the configuration buses 7a, 7b of the neural network mapper 7 are coupled to the instruction memory 20 of each neural processor unit 30 to provide the instructions for the operations that implement the one or more neurons of the artificial neural network ANN assigned thereto. As also shown in FIG. 5, the configuration buses 7a, 7b of the neural network mapper 7 are further coupled to the DRAM 11 to load the parameter data for the one or more neurons of the artificial neural network ANN assigned to the programmable processor 30. In some embodiments, the neural network mapper 7 is configured to read parameter data from the DRAM 11, for example parameter data obtained by training an ANN implemented on the dedicated processor system 100 or obtained by fine tuning an ANN implemented on the dedicated processor system 100. In some implementations, an artificial neural network processor unit 1aa, 1ab ,...,1an, 1ba, 1bb,..., 1bn may comprise a plurality of processor units that each include a respective programmable processor 30 and a respective instruction memory 20, but that share the DRAM 11. An example thereof was presented in FIG. 4.

The neural network mapper 7 maps each neuron (i.e., each intrinsic thread) in the ANN onto a programmable processor 30 in the dedicated processor system 100. In the embodiment shown in FIG. 5, the programmable processors 30 are designed according to a Harvard architecture, whereby the respective DRAM 11 and instruction memory 20 are separate, each with its own address space. This allows the programmable processors 30 to fetch an instruction at every clock cycle, undisturbed by, and potentially in parallel with, accesses to data DRAM 11. Also, each programmable processor 30 in the dedicated processor system 100 has its proper instruction memory 20. Also, in case a unit 1aa, 1ab,... has more than one programmable processor (e.g. 30, 30A in FIG. 4), these programmable processors 30, 30A will typically each have a proper instruction memory 20, 20A within the cluster. Therewith, a programmable processor 30 can access instruction memory undisturbed by, and potentially in parallel with, the instruction memory accesses of other programmable processors.

Previous European patent application 24206990.4 of the same applicant specifies more examples of a neural network processor system comprising a plurality of artificial neural network processor units (denoted therein as processor clusters) that mutually co-operate in a clock-driven manner. Still further this previous application provides additional details about RISC based processors, of which one, two or more may be comprised in each processor cluster.

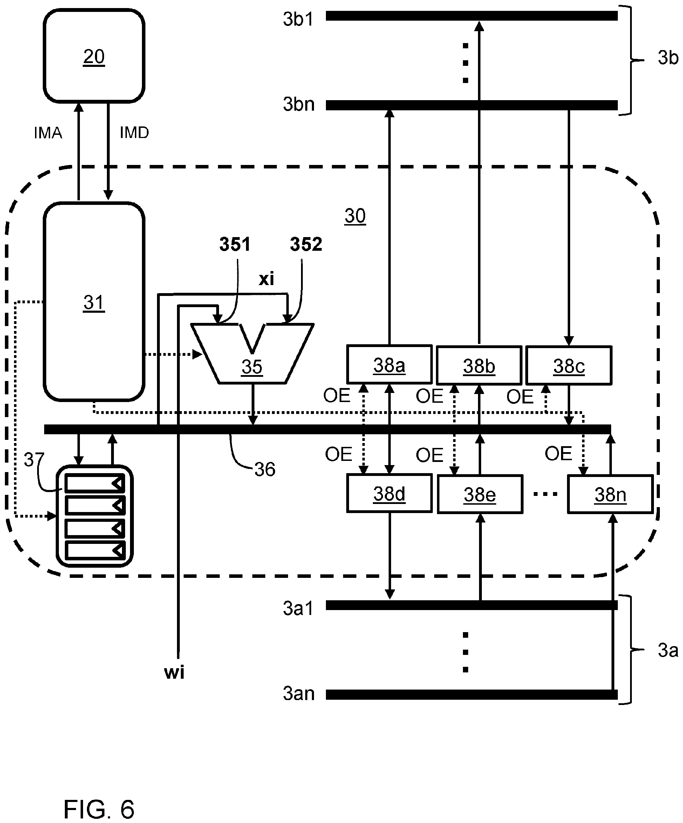

An example of a RISC processor suitable for use in an artificial neural network processor unit is schematically shown in FIG. 6. In the example shown the RISC processor comprises a general purpose processing element or execution unit 35, also denoted as ALU, which is programmed to perform a dot product computation of a first vector W having vector elements wi received at its first input 351 from the cache unit 12 and a second vector X having vector elements xi received at its second input 352. In practice, a programmable processor 30 may comprise more than one execution unit and the execution units may be of mutually different types. For example, the programmable processor 30 may comprise an ALU and a multiplier. The RISC processor 30 further has an internal bus 36, tri-statable buffer elements 38a, 38b and 38c that controllably couple the internal bus 36 to the external bus 3b, having bus lines 3b1, ..., 3bn and tri-statable buffer elements 38d, 38e,..., 38n that controllably couple the internal bus 36 to the external bus 3a, having bus lines 3a1, ..., 3an. In operation the RISC processor retrieves the vector elements xi of the second vector from the external bus 3a and outputs the computed dot product to the external bus 3b. Also a general register file 37 is coupled to the internal bus 36.

As schematically shown in FIG. 6 the instruction decoder 31 of the RISC processor 30 addresses the instruction memory 20 with an instruction memory address IMA and receives instruction memory data IMD, e.g. an opcode. In response thereto it generates the control signals (such as output enable signals OE, indicated by dotted lines) to control the general purpose processing element 35, the register file 37 and the tri-statable buffer elements 38a, 38b, ..., 38n. By way of example the instruction decoder 31 comprises a lookup table that comprises for each instruction in the instruction set (i.e. for each opcode) the corresponding control signal values for the control signals.

The processor internal bus 36 can comprise more than one parallel buses, which can be accessed simultaneously. In one embodiment, the processor internal bus 36 comprises a high or most significant segment (Internal Bus High, or IBH) and a low or least significant segment (Internal Bus Low, or IBL), which can be written to and/or read from simultaneously and in parallel.

In another embodiment, instead of the tri-statable output elements OE, the various inputs to any of the bus lines illustrated in FIG. 6 become inputs into a multiplexer controlled by input select lines, which then selects which of the inputs drives the bus line at any one moment.

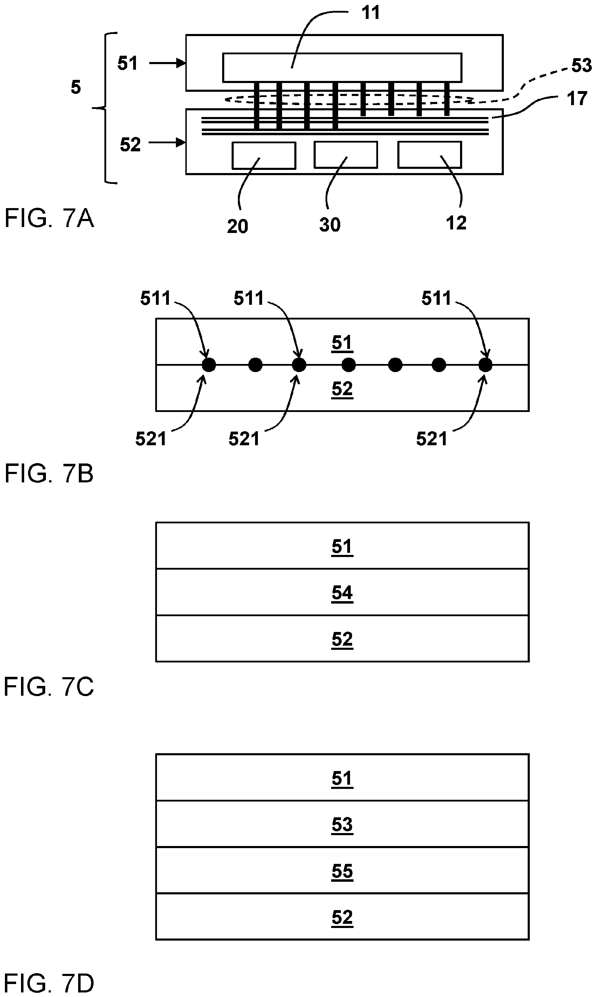

As schematically shown by examples in FIG. 7A, 7B, 7C, and 7D it is not necessary that all components of the dedicated processor system 100 are provided on a same die. In an example, the processor system is implemented in a die- or wafer-bonded pair 5 of a first die 51 and a second die 52. In the examples of FIG. 7A, 7B, 7C, and 7D the DRAM 11 of a processor cluster is implemented on the first die 51 and the other components thereof, such as instruction memory 20, processor 30 and cache unit 12 are implemented on the second die 52. Also shown are Through Silicon VIAs (TSVs, 53), and a data bus 17 with which the cache unit 12 is electrically coupled with the DRAM 11 on the first die 51. This advanced 3D packaging solution increases yield and allows for tighter integration, as the DRAMs are now vertically bonded and connected to the logic, allowing for a smaller 2D size of the chip.

FIG. 7B shows another example wherein the first die 51 has a plurality of first electric contacts 511 at a first die surface facing the second die 52 and wherein the second die 52 has a plurality of second electric contacts 521 at a second die surface facing the first die 51, wherein respective ones of the first electric contacts electrically connect with respective ones of the plurality of second electric contacts.

FIG. 7C shows a further example wherein the first die 51 and the second die 52 are electrically coupled by electrical connections in an interposer 54 that is sandwiched between the first die 51 and the second die 52.

In a still further example shown in FIG. 7D, a layer 55 of dielectric heat-conductive material is arranged between the first die 51 and the second die 52. Exemplary suitable materials for this purpose are diamond & diamond-like carbon (DLC), hexagonal boron nitride (h-BN), aluminum nitride (AlN), copper with dielectric isolation layers, graphene and graphene-enhanced composites and the like. The layer 55 of dielectric heat-conductive material may be thermally coupled to an external heat-spreader or heatsink.

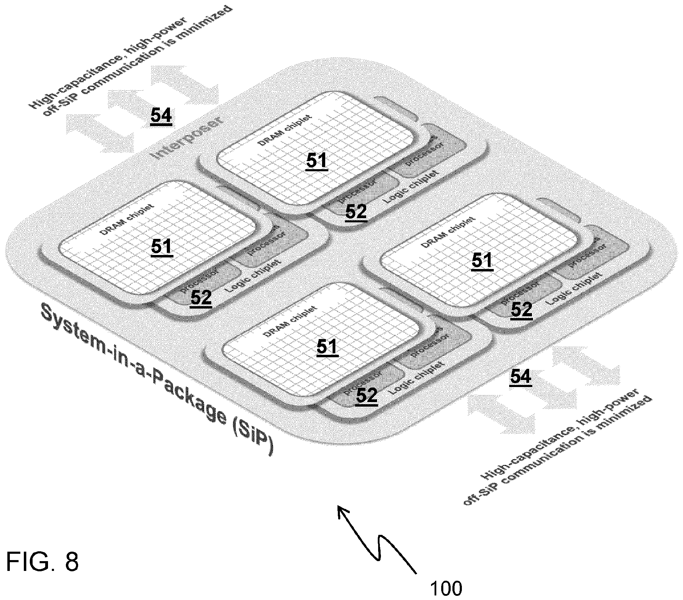

FIG. 8 shows an exploded view of an implementation of an artificial neural network processor system 100 comprising a plurality of synchronously operating artificial neural network processor units as described with reference to FIG. 5. The artificial neural network processor system 100 in this example is implemented in the form of a plurality of chiplet or die pairs 51, 52, wherein the first die 51 of a die pair comprises a DRAM that is shared by a plurality of processors in the second die 52 of the pair. The dies 52 (and, indirectly, dies 51 through dies 52) in each pair are interconnected by an interposer 54 underlying dies 52. Dies 52 can be electrically coupled to interposer 54 through, for example, Through Silicon Vias (TSVs) or traditional wire bonding. In the latter case, the pads in dies 52 that are to be wire-bonded to the interposer 54 should be placed in areas to the respective dies 52 that are not overlapped by dies 51. Each plurality of processors and the DRAM coupled thereto is denoted as an artificial neural network processor unit. The interposer 54 further enables communication between clusters.

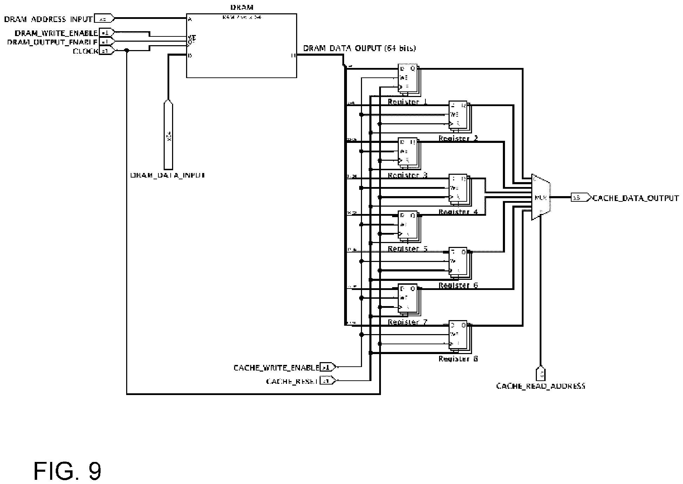

FIG. 9 shows an exemplary circuit specification of the DRAM and the cache unit as described above. By way of example, the DRAM shown therein comprises 256 words of 64 bits each (DRAMs with different numbers of words and/or bits per word are equally suitable for the purposes of the present disclosure, the specifics in FIG. 9 being merely illustrative). The DRAM has 5 inputs:
(1) the address input DRAM_ADDRESSS_INPUT, coming in through port A, which in this case is 8 bits wide so to address 2⁸ = 256 words;
(2) A DRAM_WRITE_ENABLE input, of 1 bit and coming in through port WE, which, when active, enables the DRAM to be written into-at the specified address-with the contents of its data input;
(3) a DRAM_OUTPUT_ENABLE input, also of 1 bit and coming in through port OE, which, when active, puts the 64-bit contents of the address specified in the DRAM's address input at the DRAM's data output;
(4) A CLOCK input, of 1 bit and coming in through a port denoted by a small horizontal triangle, which gates and synchronizes the operation of the other inputs and output; and
(5) a data input DRAM_DATA_INPUT, of 64 bits and coming in through port D on the left. The DRAM has a single output: a 64-bit data output DRAM_DATA_OUTPUT, going out through port D on the right.

The data word DRAM_DATA_OUTPUT, being 64 bits wide, comprises 8 blocks of 8 bits each, each block corresponding to a non-overlapping subset of bits of the 64-bit data word.

Through a splitter, each of these blocks of 8 bits is coupled to a respective one out of 8 registers denoted Register_1 to Register_8. Each of these registers is 8 bits wide. Their data input port is denoted D, and their data output port denoted Q (therefore, in this specific, merely illustrative embodiment, each register receives a byte as input and provides a byte as output).The output of each register is coupled to a respective input of a multiplexer denoted MUX. The multiplexer has a control input CACHE_READ_ADDRESS comprising 3 bits (2³ = 8 input data bytes, out of which 1 is selected and forwarded to the multiplexer's output CACHE_DATA_OUTPUT). The 8 registers plus the multiplexer constitute a cache that, at any given cycle, stores 8 bytes, out of which one can be read out at the cache's output CACHE_DATA_OUTPUT. The control input CACHE_READ_ADDRESS can thus be regarded as a cache read address, working much like the address input of a memory.

Alternatively, instead of multiplexer MUX, a controllable tri-state buffer controlled by a respective 1-bit signal can gate the output of each respective register. Only 1 out of the eight outputs is selected to drive CACHE_DATA_OUTPUT at any one time, achieving the same logical effect as the multiplexer MUX, but at the expense of more (namely, 8 instead of 3) control bits.

Each of the 8 registers in the cache has 3 control inputs of 1 bit each:
(1) a write-enable input WE, which, when active, enables the register to latch the value at its data input port D at the next rising or falling edge of the clock, as the case may be, thereby making it available at its data output port Q;
(2) A reset input R, which, when active, resets the register's output Q to zero; and
(3) a clock input denoted by a small horizontal triangle in FIG. 9. Notice that, in this particular embodiment, the 3 single-bit control inputs of all 8 registers are respectively tied together, so that all registers are write-enabled, reset, and clocked together through the single-bit control signals CACHE_WRITE_ENABLE, CACHE_RESET and CLOCK, respectively.

Here is how the circuit operates: the DRAM is first filled with its respective contents, such as e.g. the weight vectors-a.k.a. 'parameters'-of an ANN. From this point on in this brief description, the DRAM is only read from, not written into anymore.

The 8 registers in the cache are then write-enabled (via CACHE_WRITE_ENABLE) so that they latch, concurrently and in parallel, their respective bit-ranges of the 64-bit data word currently present at the DRAM's data output (DRAM_DATA_OUTPUT) at the next appropriate clock (CLOCK) transition (i.e., rising edge or falling edge, as the case may be). One may refer to this part of the operation as a 'pre-fetch.' At the completion of this first pre-fetch from DRAM, each of Register_1 to Register_8 will thus contain a different byte of the 64-bit data word from DRAM.

Once filled, as described above, the cache can be addressed for reads, so the computing system connected to CACHE_DATA_OUTPUT (not shown in FIG. 9) can retrieve any of the bytes in the cache by addressing the cache (i.e., controlling the multiplexer MUX through CACHE_READ_ADDRESS). Here the cache operates much like a regular 8-address memory.

As soon as the first pre-fetch discussed above is completed and the output data word from DRAM is safely latched into the 8 registers of the cache, the DRAM is addressed (via DRAM_ADDRESS_INPUT) and output-enabled (via DRAM_OUTPUT_ENABLE) so to retrieve a new 64-bit data word and place it at its data output (DRAM_DATA_OUTPUT) at the next appropriate clock (CLOCK) transition (i.e., rising edge or falling edge, as the case may be). This happens in parallel with the cache, now loaded with the contents from DRAM latched in the first pre-fetch, being used for single-byte data reads. This way, the DRAM access unfolds in parallel with up to 8 different reads from the cache. The DRAM access time can thus be 8x (in this particular embodiment) slower than a cache read access, without the system coupled to CACHE_DATA_OUTPUT (not shown in FIG. 9) "noticing" any delay. When the 8 cache reads are completed, the cache will latch the now-available new data word from DRAM, and the process repeats itself. This allows slower but cheaper memory-such as DRAM, instead of SRAM-to be used to e.g. store the many weights on an ANN, with little performance penalty. The pre-fetch "hides away" the extra access time of DRAM "behind" computations that only require the contents retrieved by an earlier pre-fetch.

The essence of this invention is thus this: one uses a slow, cheap, but wide memory to store the bulk of the required data (such as ANN weight vectors); in this case, a 64-bit-wide memory is used, whereas the width of the actual data samples is just a single byte. This larger memory width allows for a relatively large block of data (8 data words of 1 byte each, in this case) to be pre-fetched all in one go from the slow memory. One may refer to this as data access parallelism: the access may be slow, but several data samples are retrieved at once each time. These parallel data samples are then stored in the cache, from where they can be independently addressed and consumed, one at a time (i.e., one byte at a time in the present case), while the next slow, bulk access to DRAM is being performed. As known in the art, DRAMs up to 2048 bits wide, and even more, can be manufactured with relative ease, while many important ANNs use only half-precision (i.e., 16-bit) floating-point weights. There is thus enormous practical scope for the application of the present invention (a 2048-bit DRAM word can contain 128 separate weights with half-precision floating-point format).

Two counters (not shown) may be used to drive the operation of the system:
the first drives the CACHE_READ_ADDRESS line controlling the multiplexer MUX.

The second counts the DRAM_ADDRESS_INPUT line driving the DRAM. The second counter only counts when the first counter wraps around. This is so because, for each 64-bit data word read from DRAM, 8 single-byte reads are performed from the cache.

## Claims

1. An artificial neural network processor unit (1) comprising:
a dot product computation unit (35) with a first input (351) for receiving subsequent first vector elements (wi) of a first vector (W) and a second input (352) for receiving subsequent second vector elements (xi) of a second vector (X), the dot product computation unit (35) being configured to compute a dot product (W•X) of the first vector (W) and the second vector (X);
a DRAM (11) configured to simultaneously output a plurality of first vector elements of the first vector (W);
a cache unit (12) comprising a plurality of registers (13) configured to simultaneously load respective ones of the plurality of first vector elements into respective ones of the plurality of registers;
control logic (15) configured to control the dot product computation unit (35), the DRAM (11) and the cache unit (12), the control logic comprising a register selector (141, 142; 144) configured to cause the cache unit to output the plurality of first vector elements one by one to the first input of the dot product computation unit (35) for multiplication with a respective second vector element of the second vector in the process of computing the dot product.

2. The artificial neural network processor unit (1) according to claim 1, wherein the dot product computation unit (35) is part of a reduced instruction set (RISC) processor (30).

3. The artificial neural network processor unit (1) according to claim 2, wherein at least part (31) of the control logic (15) is part of the reduced instruction set (RISC) processor (30).

4. The artificial neural network processor unit (1) according to claim 2 or 3, wherein the RISC processor (30) comprises an instruction decoder (31) that is configured to fetch and decode:
an instruction that causes the DRAM (11) to simultaneously output a plurality of first vector elements of the first vector;
an instruction that causes the cache unit (12) to simultaneously load respective ones of the plurality of first vector elements into respective ones of the plurality of registers (13); and/or
an instruction that outputs one of the plurality of first vector elements to the dot product computation unit (35);
wherein the dot product computation unit (35) is configured to multiply one of the plurality of first vector elements with a respective second vector element of the second vector in the process of computing the dot product.

5. The artificial neural network processor unit (1) according to claim 2, 3 or 4, wherein the RISC processor (30) comprises an instruction decoder (31) that is configured to fetch and decode an instruction that causes the DRAM to perform a refresh cycle.

6. The artificial neural network processor unit (1) according to one of the preceding claims, wherein cache unit (12) comprises a multiplexer (142) that is coupled to a respective output of each of the plurality of registers (13) and that is configured to select one of said respective outputs in accordance with selection signals issued by the register selector (141).

7. The artificial neural network processor unit (1) according to one of the claims 1-5, wherein the plurality of registers (13) are each coupled by a bus (16) to the first input (351) of the dot product computation unit (35) and wherein the register selector (144) is configured to output enable the plurality of registers one by one by a respective output enable signal (OE1,...,OEn).

8. The artificial neural network processor unit (1) according to any of the preceding claims, implemented in a wafer bonded pair (5) of a first die (51) and a second die (52), wherein at least part of the DRAM (11) is implemented on the first die and wherein the dot product computation unit (35), the cache unit (12) and the control logic are implemented in the second die (52).

9. The artificial neural network processor unit (1) according to claim 8, wherein the DRAM (11) comprises a matrix of DRAM memory cells and row and column address decoding logic on the first die (51), and wherein the control logic (15) implemented in the second die (52) is configured to control the row and column address decoding logic.

10. The artificial neural network processor unit (1) according to claim 8 or 9, wherein the first die (51) and the second die (52) are electrically coupled with Through Silicon VIAs (TSVs, 53).

11. The artificial neural network processor unit (1) according to claim 8 or 9, wherein the first die (51) and the second die (52) are electrically coupled by electrical connections in an interposer (54) that is sandwiched between the first die (51) and the second die (52).

12. The artificial neural network processor (1) according to any of the claims 8 to 11, further comprising a layer (55) of dielectric heat-conductive material between the first die (51) and the second die (52).

13. The artificial neural network processor unit (1) according to claim 12, wherein the layer (55) of dielectric heat-conductive material is thermally coupled to an external heat-spreader or heatsink.

14. The artificial neural network processor unit (1) according to claim 8 or 9, wherein the first die (51) has a plurality of first electric contacts (511) at a first die surface facing the second die and wherein the second die (52) has a plurality of second electric contacts (521) at a second die surface facing the first die, wherein respective ones of the first electric contacts electrically connect with respective ones of the plurality of second electric contacts.

15. An artificial neural network processor system (100) comprising a plurality of synchronously operating artificial neural network processor units (1) as specified in one of the preceding claims that are arranged in a two-dimensional array, wherein a first plurality of artificial neural network processor units in a first column of the array are logically coupled to a second plurality of artificial neural network processor units in a second, directly adjacent column by at least one shared external bus (3a).
